# EUROPEAN PATENT APPLICATION

(11) **EP 4 286 283 A1**
(43) Date of publication of application: **06.12.2023**
(21) Application number: 22461559.1
(22) Date of filing: 31.05.2022
(51) Int. Cl.: B64F 5/30, B05B 13/06, B05B 1/14, B05B 15/74, B08B 9/08, B64D 11/02

(54) **RINSE NIPPLE**

(71) Applicant: B/E Aerospace, Inc., Winston Salem, NC 27105 (US)
(72) Inventor: SWIRNIAK, Pawel, 51-317 Wroclaw (PL); TARNOWSKI, Adrian, 51-317 Wroclaw (PL)
(74) Representative: Dehns

(57) **Abstract**

A rinse device comprising a housing part (120, 130, 180) and a rinse head (140), the housing part having a first end configured to be attached to a supply of pressurised fluid and a second end to which the rinse head is attached, an axis X defined along the housing part from the first end to the second end, the housing part defining a cavity (125) through which the pressurised fluid flows, in use, from the first end to the rinse head, the rinse head being provided with a plurality of openings (200) through which the pressurised fluid is ejected; and wherein the housing part comprises an outer housing tube (130) and an inner piston (180) movable axially relative to the outer housing tube, and a spring (190) attached at a first end to the outer housing tube and at a second end to the piston, and wherein the rinse head (140) is attached to the piston at the second end of the housing part, such that the spring is biased to hold the piston at a first axial position relative to the outer housing tube until a pressure of the fluid inside the cavity exceeds an axial force of the spring, wherein when the pressure of the fluid inside the cavity (125) exceeds the axial force of the spring, the piston is extended axially relative to the housing tube against the force of the spring to a second axial position relative to the outer housing tube.

## Description

### TECHNICAL FIELD

The present disclosure relates to devices using for cleaning the interior of a tank such as, but not exclusively, a waste tank e.g. in an aircraft.

### BACKGROUND

Tanks or reservoirs containing matter such as waste from a sanitation system or other matter which may be contaminated or hazardous or generally undesirable if left on the inner surfaces of the tank for a period of time often include a device that extends into and spray water or some cleaning fluid around the tank to clean the tank. This can avoid the need for manual cleaning of the tank which can be unpleasant or even dangerous. Furthermore, the tanks are often too small to enable a person to access the interior to clean it properly, or the tank may be vacuum sealed and so not accessible for manual cleaning and/or access to the tanks may be too difficult for the tank to be cleaned by a person. Passenger aircraft include large tanks for human waste from the aircraft toilets. These tanks are emptied after a flight and the inside of the tank is cleaned. This is usually done by means of a device, known as a rinse nipple, having nozzles through which pressurised water or a cleaning solution is sprayed around the interior of the tank.

A conventional rinse nipple includes a housing part to which a rinse hose providing the cleaning fluid is connected. The housing extends through the tank wall. A rinse head is provided at the end of the housing located inside the tank. The rinse head is provided with multiple openings or nozzles and the pressurised fluid is ejected out through the nozzles to clean the tank. Some rinse nipples have a rotatable rinse head. To avoid the need for power to be supplied to rotate the rinse head, the openings or nozzles are angled and offset relative to the axis of rotation of the head. This positioning provides momentum about the axis to cause the head to spin about the axis thus maximising the coverage of the fluid inside the tank.

Whilst the multiple nozzles and spinning head ensures that the fluid is sprayed as much as possible around the tank interior, due to the presence of various components and fitting that may be provided on the tank walls, extending to the tank interior, there may be some areas that are effectively obstructed or hidden by these components and are not reached by the spray from the spinning head. This can result in waste material or the like remaining in those areas and clogging or building up. The tank cannot, therefore, be fully purged of all of the waste which can cause contamination of the tank.

There is, therefore, a need for a rinse nipple that can ensure that a greater area of the tank interior is contacted by the spray of cleaning fluid even if such components are present.

### SUMMARY

According to the present disclosure, there is provided a rinse device comprising a housing part and a rinse head, the housing part having a first end configured to be attached to a supply of pressurised fluid and a second end to which the rinse head is attached, an axis X defined along the housing part from the first end to the second end, the housing part defining a cavity through which the pressurised fluid flows, in use, from the first end to the rinse head, the rinse head being provided with a plurality of openings through which the pressurised fluid is ejected; and wherein the housing part comprises an outer housing tube and an inner piston movable axially relative to the outer housing tube, and a spring attached at a first end to the outer housing tube and at a second end to the piston, and wherein the rinse head is attached to the piston at the second end of the housing part, such that the spring is biased to hold the piston at a first axial position relative to the outer housing tube until a pressure of the fluid inside the cavity exceeds an axial force of the spring, wherein when the pressure of the fluid inside the cavity exceeds the axial force of the spring, the piston is extended axially relative to the housing tube against the force of the spring to a second axial position relative to the outer housing tube.

A tank assembly and a cleaning method are also provided.

### BRIEF DESCRIPTION

Examples of the rinse device according to this disclosure will be described with reference to the drawings. It should be noted that these are merely examples and variations are possible within the scope of the claims.
Figure 1 shows an example of a known rinse device for the purposes of explanation.
Figure 2 is shown to explain the problem of the known device such as shown in Fig. 1.
Figure 3 shows an example of a rinse device according to the disclosure.
Figure 4 is a cross-sectional view of a rinse device according to the disclosure.
Figure 5A shows an example of the rinse device of the disclosure in a first position.
Figure 5B shows the device in a second, extended position.

### DETAILED DESCRIPTION

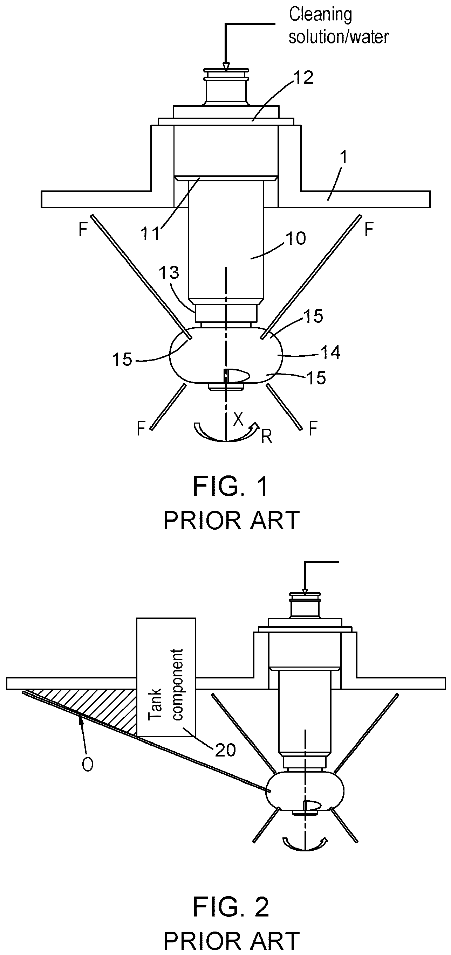

A typical rinse nipple is shown in Figs. 1 and 2. The rinse nipple is shown mounted in the wall 1 of a tank or vat or other reservoir. The rinse nipple comprises a housing 10 one end 11 of which is provided with a fitting 12 arranged to be attached to a hose (not shown) via which pressurised water or cleaning solution is provided. At the other end 13 of the housing through which the pressurised fluid flows, which extends into the tank, is mounted a rinse head 14 mounted to rotate relative to the housing 10. The rinse head is arranged to rotate in the direction of arrow R about an axis of rotation X which is the axis through the housing from the one end 11 to the other end 13.

The rinse head 14 is provided with a number of holes or nozzles 15 via which the pressurised fluid F forced through the housing is ejected into the tank. The nozzles can be positioned offset from the axis of rotation and at angles such that the ejection of the pressurised fluid F provides a force that causes the rinse head 14 to rotate relative to the housing about the axis X.

The pressurisation of the fluid and the rotation of the rinse head provides a good range of coverage of the interior of the tank with cleaning fluid. In some cases, however, areas O may exist, due to the presence of other components 20 on the inside of the tank, that fluid from the rinse head cannot reach.

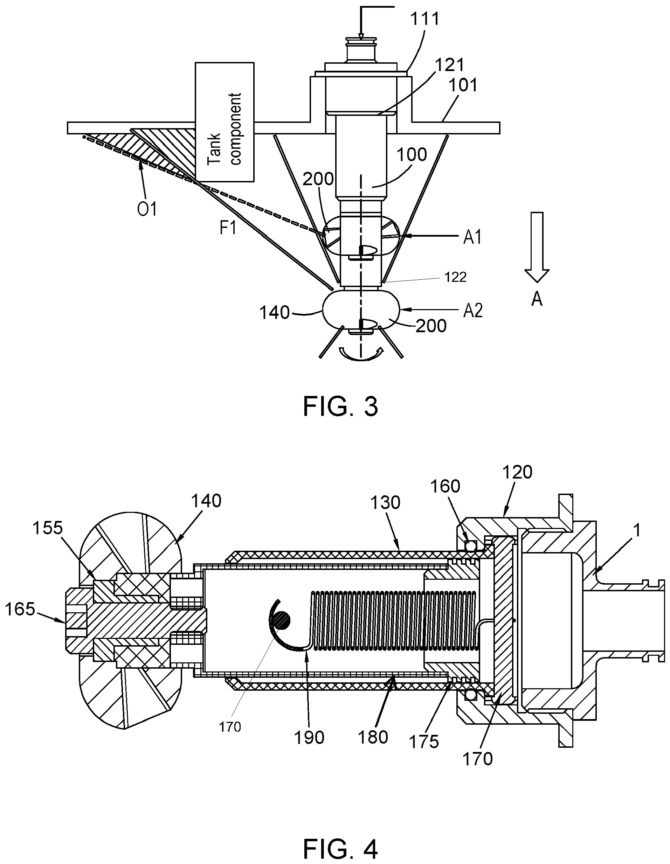

The rinse device according to this disclosure is designed to address this problem as will be described with reference to Figs. 3 to 5.

As seen in Fig. 3, the rinse device of the disclosure is configured such that the rinse head 140 has two different axial positions A1, A2. In the first axial position A1, ejected fluid spray (indicated by the dashed lines) may be prevented from reaching an area O1 obstructed by a component, as in the conventional devices. When the rinse head is moved, in direction A, to the second axial position A2, the ejected fluid F1 hits the tank wall 101 at a different (smaller) angle and can reach a part of the wall within the area 01. Having the second axial position from which fluid is ejected increases the overall coverage of the rinse nipple in the tank. In the example described, the rinse device is arranged such that the first axial position corresponds essentially to the device being at rest. Once pressurised fluid is supplied to the device, the device quickly moves to the second axial position from which the fluid is ejected to clean the tank. It could be envisaged, in other examples, that the device performs a first cleaning step at the first axial position and then a second cleaning step at the second axial position. This would require the device to be constructed such that a greater pressure is required to move the device to the second axial position than for the first, 'quick' moving device example.

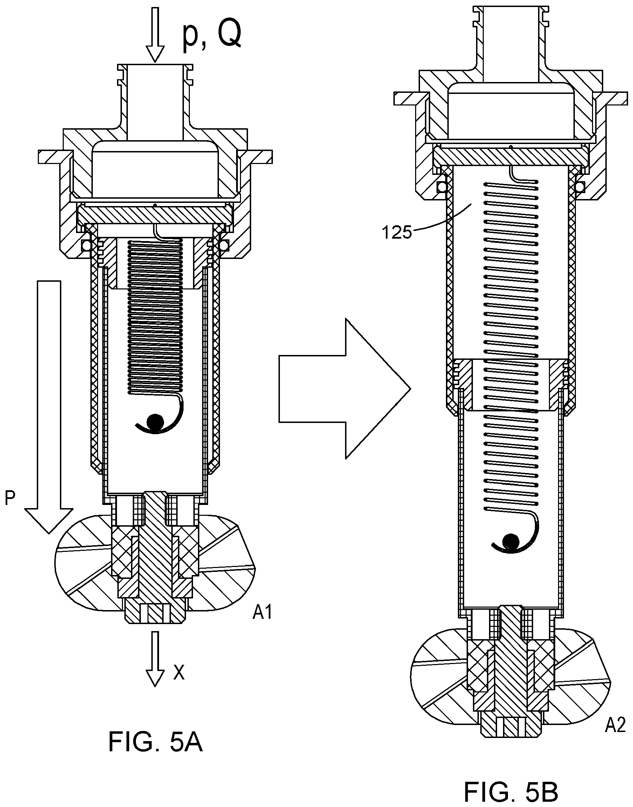

The mechanism that enables the different axial positions will now be described further with reference to Figs. 4, 5A and 5B.

The device of the present disclosure includes a housing part 120, 130, 180 and a rinse head 140. A first end 121 of the housing part is configured to be connected to a hose for supply of the cleaning fluid as described for the conventional device. The rinse head 140 is provided at the other, second end 122 of the housing part. There are various ways in which the end of the housing could be configured to attach to a hose and the invention is not limited to any particular manner. In the example shown, the housing includes a connector body 120 mounted to an end of a housing tube 130, preferably with a seal such as an O-ring 160 therebetween. A connector port 110 is received in the connector body 120 for attachment to a hose (not shown). This end of the housing is also configured to mount to the wall of the tank. For example, a flange 111 may extend radially outwards from the end or from the connector body 120 such that when the rinse device is fitted into an opening or port in the tank wall, for cleaning, the housing tube 130 extends inside the tank and the flange 110 extends outwards from the hole and secures to the outer side of the tank wall as best seen in Fig. 3. In the example shown, a spring pin 170 is provided between the housing tube and the connector body to hang the housing tube inside the connector body.

The housing part further includes a piston 180 mounted within the housing tube 130 and a spring 190. The spring 190 is attached at one end to the housing tube e.g. via a sealed bushing 175 and at its opposite end to the piston 180. The rinse head 140 is attached to the end of the piston furthest from the end of the housing configured to connect to the hose. The piston 180 is arranged for axial movement within and relative to the housing tube 130.

In the first position A1 of the rinse head, the spring 190 is in its default compressed state as shown in Fig. 5A. The spring exerts an axial force holding the piston 180 and, hence, the rinse head 140 at its first axial position A1. In this position, as cleaning fluid is provided from the hose into the device housing, the fluid flows through the housing into the rinse head and sprays out through openings or nozzles 200 in directions such as indicated by the dashed line in Fig. 3. Here only one spray, from one nozzle is shown. In practice, however, there will be several nozzles around the rinse head from which fluid will spray in various directions. As with the conventional device described above, the nozzles may be positioned relative to the axis such that as the fluid is ejected, the resultant forces cause rotation of the rinse head about the axis X.

As the tank is being rinsed, the cleaning fluid is provided from the hose at a certain minimum pressure p and flow Q. The rinsing fluid is flowing into the cavity 125 defined by the housing tube and the piston and the closed end of the rinse head. Although some of the fluid is being ejected from the nozzles, the pressure inside the cavity 125 will increase as fluid is provided from the hose.

Once the axial pressure of the fluid in the cavity 125, acting in the direction of arrow P, exceeds the force of the spring 190, the piston 180 and the rinse head 140 attached to the piston will extend axially as shown in Fig. 5B, relative to the housing tube, extending the spring 190, moving the rinse head to the second axial position A2. Fluid will be ejected from the nozzles at the second axial position A2, as well as all axial positions between A1 and A2 as the piston is being extended, such that fluid sprays around the tank at different angles due to the different axial positions of the rinse head, increasing the coverage of the interior of the tank by the cleaning fluid.

The speed at which the rinse head extends will depend on the spring force as well as the pressure p and flow Q of the fluid. In a preferred design, the device is configured such that the rinse head extends rapidly once the spring force is overcome.

When the rinsing or cleaning of the tank is completed and the supply of fluid is switched off, the pressure within the housing cavity 125 will reduce and the spring force will cause the piston and, therefore, the rinse head to retract relative to the housing tube back to axial position A1. The spring will hold the rinse head in this position until the next rinsing operation.

In the example shown, the rinse head 140 is secured to the piston 180 by means of a bushing 155 and a screw 165 that passes through the rinse head 140 and holds the head in position relative to the piston by means of a shoulder of the screw engaging with the rinse head. A spring pin may be provided that is inserted into the piston 180 to connect and secure the spring 190 to the piston 180.

## Claims

1. A rinse device comprising a housing part (120, 130, 180) and a rinse head (140), the housing part having a first end configured to be attached to a supply of pressurised fluid and a second end to which the rinse head is attached, an axis X defined along the housing part from the first end to the second end, the housing part defining a cavity (125) through which the pressurised fluid flows, in use, from the first end to the rinse head, the rinse head being provided with a plurality of openings (200) through which the pressurised fluid is ejected; and wherein the housing part comprises an outer housing tube (130) and an inner piston (180) movable axially relative to the outer housing tube, and a spring (190) attached at a first end to the outer housing tube and at a second end to the piston, and wherein the rinse head (140) is attached to the piston at the second end of the housing part, such that the spring is biased to hold the piston at a first axial position relative to the outer housing tube until a pressure of the fluid inside the cavity exceeds an axial force of the spring, wherein when the pressure of the fluid inside the cavity (125) exceeds the axial force of the spring, the piston is extended axially relative to the housing tube against the force of the spring to a second axial position relative to the outer housing tube.

2. A rinse device as claimed in claim 1, wherein the rinse head (140) is rotatable relative to the housing part.

3. The rinse device as claimed in claim 2m wherein the plurality of openings (200) are distributed around the rinse head such that the force of fluid spraying from the openings is such as to cause rotation of the rinse head.

4. The rinse device of any preceding claim, further providing a connector (120) at the first end of the housing part for attachment to the supply of pressurised fluid.

5. The rinse device of claim 4, further comprising a seal (160) between the first end of the housing part and the connector.

6. The rinse device of any of claims 4 and 5, further comprising a connector port (110) received in the connector (120) for connection to a hose.

7. The rinse device of any preceding claim, further comprising a bushing attaching the spring (190) to the housing tube.

8. A tank cleaning assembly, comprising a tank defined by a tank wall (101) and a rinse device according to any preceding claim mounted through the tank wall such that the first end of the housing part is at the exterior to the tank and the rinse head is at the interior of the tank.

9. A tank cleaning assembly as claimed in claim 8, wherein the rinse device is mounted through an opening in the tank wall (101) and is secured by means of a flange.

10. A tank cleaning assembly as claimed in claim 8 or 9, further comprising a hose connected to the first end of the housing part.

11. A tank cleaning assembly as claimed in claim 10, further comprising a supply of cleaning fluid for connection to the rinse device via the first end of the housing part.

12. The tank cleaning assembly of any of claims 8 to 10, wherein the tank is a waste tank of an aircraft.

13. A method of cleaning an interior of a tank using a rinse device as claimed in any of claims 1 to 7, the method comprising mounting the rinse device through a wall of the tank to be cleaned, providing pressurised cleaning fluid to the rinse device at the first end of the housing part, whereby the rinse head is caused to move to the second axial position in response to the pressure of the applied fluid exceeding the spring force, whereupon cleaning fluid sprays from the openings of the rinse head.

14. The method of claim 13, wherein the spraying of the cleaning fluid causes rotation of the rinse head.

15. The method of claim 13 or 14, wherein upon removal of application of the pressurised fluid, the rinse head returns to the first axial position.
